# EUROPÄISCHE PATENTSCHRIFT

(11) **EP 1 856 335 B1**
(45) Veröffentlichungstag und Bekanntmachung des Hinweises auf die Patenterteilung: **04.10.2017**
(21) Anmeldenummer: 06707342.9
(22) Anmeldetag: 01.03.2006
(51) Int. Cl.: E03C 1/04, F21V 33/00

(54) **SANITÄRARMATUR MIT EINEM AUS TRANSPARENTEM MATERIAL BESTEHENDEN, BELEUCHTETEN AUSLAUF**
SANITARY FITTING WITH AN ILLUMINATED OUTLET CONSISTING OF TRANSPARENT MATERIAL
ROBINET SANITAIRE DOTE D'UNE UNITE D'ECOULEMENT REALISEE DANS UN MATERIAU TRANSPARENT ET ECLAIREE

(30) Priorität: 07.03.2005 DE 102005010349
(43) Veröffentlichungstag der Anmeldung: 21.11.2007
(73) Patentinhaber: Hansa Armaturen GmbH, 70567 Stuttgart (DE)
(72) Erfinder: KUNKEL, Horst, 70567 Stuttgart (DE)
(74) Vertreter: Ostertag & Partner Patentanwälte mbB
(86) Internationale Anmeldenummer: PCT/EP2006/001848
(87) Internationale Veröffentlichungsnummer: WO 2006/094684

(56) Entgegenhaltungen:
- EP-A- 1 479 333
- WO-A-01/77577
- WO-A-2005/064231
- WO-A-2006/034757
- DE-A1- 4 400 071
- DE-A1- 10 338 885
- GB-A- 2 393 389
- US-A- 4 749 126
- US-A- 5 708 749
- US-A1- 2002 074 420
- US-B1- 6 375 342
- US-B1- 6 393 192

## Beschreibung

Die Erfindung betrifft eine Sanitärarmatur nach dem Oberbegriff des Anspruchs 1.

Bekannt sind Sanitärarmaturen, wie z.B. Einarm-Hebelmischer, die einen Wasserzulauf, ein Bedienelement, das zum Einstellen von Wassermenge und -temperatur dient, und einen Auslauf aufweisen. Üblicherweise besteht der Auslauf solcher Sanitärarmaturen aus Metall. Insbesondere bei höherwertigen Armaturen werden jedoch auch transparente Materialien wie Glas eingesetzt. So ist z.B. eine Sanitärarmatur bekannt, bei der der Auslauf als gläserner Auslaufteller ausgebildet ist, in den der Wasserzulauf durch eine in der Tellerfläche des Auslauftellers angeordnete Bohrung mündet.

Eine Sanitärarmatur der eingangs genannten Art ist in der WO 01 77 577 A1 beschrieben. Bei dieser wird Licht in radialer Richtung in eine aus transparentem Material gefertigte wasserdurchströmte Düse eingespeist, die über nahezu ihre gesamte Längserstreckung hinweg von nicht transparenten Materialien umgeben ist.

Die US 2002/0074420 A1 beschreibt in einem Ausführungsbeispiel einen verhältnismäßig breiten, rinnenartigen Auslauf, durch dessen Bodenfläche eine Vielzahl von Bohrungen hindurchgeführt ist. In diese Bohrungen sind Lichtleiter eingeführt, an deren anderem Ende sich eine Beleuchtungseinrichtung befindet. Das Licht tritt dabei nicht in den Auslauf ein, sondern beleuchtet ausschließlich das über die Bodenfläche des Auslaufs strömende Wasser.

Eine ähnliche Sanitärarmatur ist aus der US 6 375 342 B1 bekannt, bei der allerdings der Auslauf nicht rinnenförmig, sondern nach oben geschlossen ist.

Die US 6 393 192 B1 betrifft einen Wasserauslauf, der durch eine Gebäudewand und durch eine an der Gebäudewand befestigte Plastik hindurchgeführt ist. Der Auslauf selbst besteht aus transparentem Material. Entlang der Mittelachse des Auslaufes ist ein Lichtleiter geführt, dessen äußerer Endbereich, der innerhalb der an der Wand befestigten Plastik liegt, an der Mantelfläche nicht verspiegelt ist. Der Lichtleiter wirkt so in diesem freiliegenden Bereich als Lichtquelle, welche den transparenten Auslauf in radialer Richtung durchstrahlt und dabei auch die Plastik beleuchtet.

Die EP 1 479 333 A2 betrifft eine beleuchtete Durchabtrennung, während die GB 2 393 389 A eine Sanitärarmatur beschreibt, durch deren Auslauf zwei optische Fasern hindurchgeführt sind. Durch diese kann Licht unterschiedlicher Farbe geleitet werden, welches dann den austretenden Wasserstrahl beleuchtet. Alternativ zu den optischen Fasern können an der Mündung des Wasserauslaufs auch farbiges Licht ausstrahlende Leuchtdioden vorgesehen sein.

Aufgabe der vorliegenden Erfindung ist es, eine Sanitärarmatur der eingangs genannten Art weiterzubilden. Insbesondere soll eine Sanitärarmatur mit noch eindrucksvolleren Lichteffekten angegeben werden.

Erfindungsgemäß wird dies durch eine Sanitärarmatur nach Anspruch 1 erreicht.

Indem Licht in das transparente Material eingekoppelt wird, wirkt dieses als Lichtleiter, so dass ein Teil des Lichtes im Inneren des transparenten Materials geführt wird und an einer gegenüberliegenden Stirnfläche austritt, während ein anderer Teil des Lichts entlang des Lichtweges durch die Oberfläche des transparenten Materials austritt und diesem so einen wirkungsvollen Leuchteffekt verleiht. Auf diese Weise wird durch einfache technische Mittel eine Vielzahl neuer Gestaltungsmöglichkeiten eröffnet, die die Attraktivität der Sanitärarmatur für den Benutzer steigern. Außerdem kann der Benutzer den Auslauf besonders bei schlechten Lichtverhältnissen besser sehen.

Dadurch, dass das transparente Material sich in einer Längsrichtung verjüngt, tritt mehr Licht durch die von Wasser überströmte Oberfläche des transparenten Materials aus, was zu noch eindrucksvolleren Lichteffekten führt.

Das Licht wird über eine Stirnfläche des transparenten Materials eingekoppelt. Ein solcher Aufbau ist leicht zu realisieren und wartungsfreundlich.

Die Beleuchtungseinrichtung umfasst mindestens eine Leuchtdiode. Leuchtdioden sind extrem langlebig und mittlerweile sind auch Leuchtdioden in sehr lichtstarker Ausführung verfügbar.

Der Auslauf ist als eine nach oben offene Rinne ausgebildet, deren Boden vollständig aus dem transparenten Material besteht.

Bei einer nicht erfindungsgemäßen Ausführungsform ist der Auslauf als Auslaufteller an sich bekannter Art ausgebildet, in den der Wasserzulauf durch eine in der Tellerfläche des Auslauftellers angeordnete Bohrung mündet. Der Auslaufteller besteht aus dem transparenten Material und die Beleuchtungseinrichtung ist im Inneren der Bohrung angekoppelt.

Vorzugsweise ist eine Steuerungseinrichtung vorgesehen, die die Beleuchtungseinrichtung in Abhängigkeit des Bedienzustandes des Bedienelementes steuert. So kann die Steuerungseinrichtung die Beleuchtungseinrichtung anschalten, wenn über das Bedienelement ein Wasserfluss ausgelöst wurde. Außerdem kann die Steuerungseinrichtung bei einer vorteilhaften Ausführungsform die Farbe eingekoppelten Lichts in Abhängigkeit der über das Bedienelement eingestellten Wassertemperatur steuern. Dadurch wird dem Benutzer auf einfache Weise die Temperatur angezeigt.

Attraktive Effekte lassen sich erzielen, indem in die Oberfläche des transparenten Materials beispielsweise durch Einritzen Lichtaustrittsflächen eingebracht werden. Dies ermöglicht es einen Schriftzug oder sonstige Formen anzuzeigen.

Besonders wirkungsvolle Effekte können auch durch auf die Oberfläche des transparenten Materials aufgebrachte lumineszierende Folien erzielt werden. Mit solchen Folien lassen sich stark leuchtende Objekte darstellen, die aufgrund ihrer Helligkeit gegenüber einem Auslauf aus transparentem Material die Illusion frei schwebender Objekte vermitteln.
Zusätzlich kann eine Oberfläche teilverspiegelt sein. Dadurch wird die Lichtleitung innerhalb des transparenten Materials verbessert und der durch die Oberfläche austretende Lichtanteil kann besser über die ganze Länge des Auslaufs verteilt werden.

Außerdem kann das transparente Material auf einer Unterseite verspiegelt werden. Dadurch wird vermieden, dass Licht durch die vom Betrachter abgewandte Unterseite des transparenten Materials austritt und so "verloren geht".

Bei einer weiteren Ausführungsform ist unter dem transparente Material in definiertem Abstand ein Spiegel angebracht und die Beleuchtungseinrichtung ist derart angeordnet, dass das Licht über Mehrfachreflexion zwischen dem Spiegel und dem transparenten Material entlang einer Längsrichtung in das transparente Material eingekoppelt wird. Auch auf diese Weise lassen sich eindrucksvolle Effekte erzielen und die entlang einer Längsrichtung durch eine Oberfläche des transparenten Materials austretende Lichtleistung wird optimiert.

Im folgenden werden verschiedene Ausführungsbeispiele der Erfindung anhand der Zeichnungen näher erläutert. Es zeigen:
- Figur 1a: eine Seitenansicht einer erfindungsgemäße Sanitärarmatur in einem ersten Ausführungsbeispiel, teilweise im Schnitt
- Figur 1b: eine Draufsicht auf die Sanitärarmatur aus Figur 1a,
- Figur 1c: einen Schnitt durch den Auslauf der Sanitärarmatur aus Figur 1a entlang der dortigen Linie I-I
- Figur 2: eine isometrische Darstellung eines aufgeschnittenen Auslaufs in Form eines Glastellers für eine Sanitärarmatur eines nicht erfindungsgemäßen Ausführungsbeispiels,
- Figur 3: die Lichtleitung in einem keilförmig ausgeformten, transparenten Element eines Auslaufs, und
- Figur 4: die Einkopplung von Licht entlang einer Längsrichtung eines transparenten Elements eines Auslaufs über Mehrfachreflexion an einem von dem transparenten Element beabstandeten Spiegel.

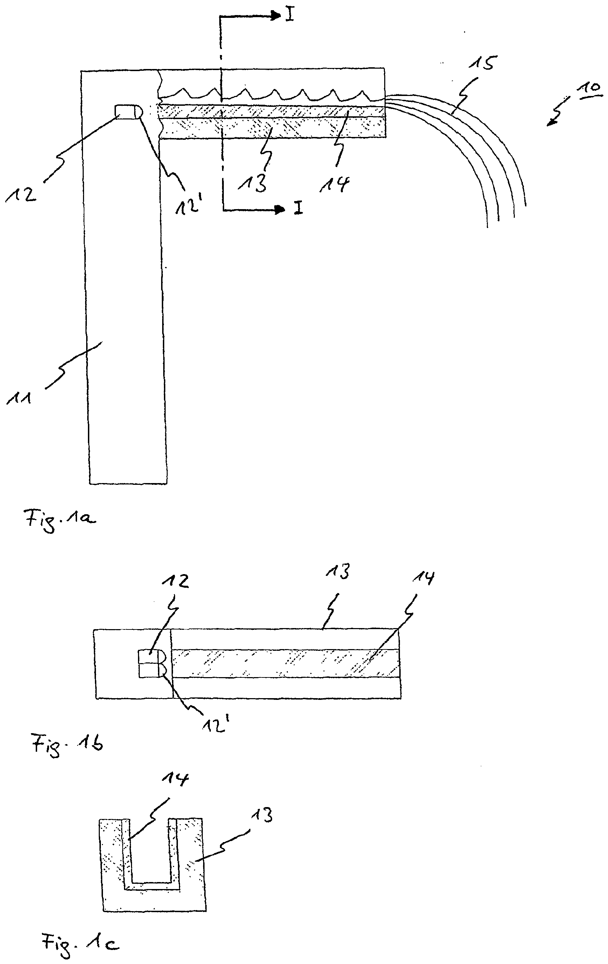

Bei dem in Figur 1a schematisch gezeigten ersten Ausführungsbeispiel besitzt die Sanitärarmatur 10 einen Armaturenkorpus 11 mit einem rechtwinklig dazu verlaufenden Auslauf 13. Der Auslauf 13 ist als eine nach oben offene Rinne ausgebildet, deren Innenseite mit einer transparenten Auskleidung 14 versehen ist. In dem Armaturenkorpus 11 ist ein Leuchtdiodenpaar 12 angeordnet, welches Licht in die Stirnseite der transparenten Auskleidung 14 einzukoppeln vermag. Die Sanitärarmatur 10 besitzt außerdem ein Bedienelement an sich bekannter Art zum Einstellen des Volumenstroms und der Temperatur eines Wasserflusses und jeweils einen Warm- und Kaltwasserzulauf, die an die gebäudeseitige Warm- und Kaltwasserversorgung angeschlossen werden. Bedienelement und Wasserzuläufe sind in den Figuren nicht gezeigt, da sie hier nicht weiter interessieren.

Wird über das Bedienelement ein Wasserfluss ausgelöst, so strömt Wasser durch den Armaturenkorpus 11 in den als Rinne ausgebildeten Auslauf 13 und tritt an dessen Ende als Wasserstrahl 15 aus.

In Figur 1b ist eine Draufsicht auf die Sanitärarmatur 10 gezeigt. Figur 1c zeigt einen Schnitt durch den Auslauf 13. Die transparente Auskleidung 14 ist in dem ersten Ausführungsbeispiel als U-Profil ausgebildet und bedeckt die gesamten Innenflächen der Rinne. Alternativ können jedoch auch nur die Bodenfläche oder die Seitenflächen der Rinne mit einer "Zunge" aus dem transparenten Material ausgelegt sein. Als transparentes Material eignen sich Glas oder Acrylglas so wie andere transparente Kunststoffe.

Die Leuchtdioden 12 werden über eine nicht gezeigte Steuerungseinrichtung angeschaltet, wenn über das Bedienelement einen Wasserfluss ausgelöst wurde. Die Leuchtdioden 12 besitzen jeweils eine aufgeklebte Linse 12', die das Licht der Leuchtdioden 12 bündelt und in die Stirnseite der transparenten Auskleidung 14 eingekoppelt. Ein Teil des Lichts wird in der transparenten Auskleidung 14 entlang der Rinne geführt und tritt am Ende des Auslaufs 13 mit dem Wasserstrahl 15 aus. Ein anderer Anteil des Lichts tritt entlang des Lichtweges durch die Oberfläche der transparenten Auskleidung 14 aus, und verleiht so dem in der Rinne fließenden Wasserstrom einen angenehmen Schimmer.

Insbesondere bei Verwendung von transparenten Kunststoffen als Auskleidung 14 ist es möglich, die Leuchtdiode 12 wasserdicht in den transparenten Kunststoff einzugießen. Ebenso können die Leuchtdioden 12 in seitliche Vertiefungen in der transparenten Auskleidung 14 aufgenommen sein.

Bei einer weiteren Abwandlung kann die Rinne etwas breiter als in den Figuren dargestellt ausgebildet werden und anstelle einer transparenten Auskleidung 14 einen Rinnenboden aufweisen, der vollständig aus transparentem Material besteht. Ebenso kann auch die ganze Rinne 13 aus transparentem Material gefertigt sein.

Bei einer Weiterbildung der Erfindung handelt es sich bei den beiden Leuchtdioden 12 um mehrfarbige Leuchtdioden, die von der nicht gezeigten Steuerungseinrichtung in Abhängigkeit der eingestellten Wassertemperatur des Wasserstrahls 15 so angesteuert werden, dass die Farbzusammensetzung des ausgestrahlten Lichts mit der Temperatur verändert wird.

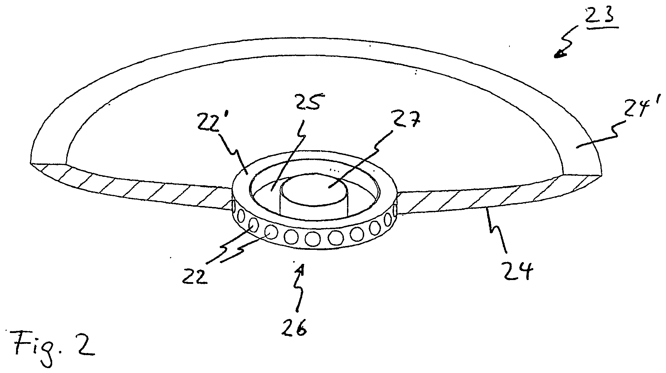

In Figur 2 ist ein nicht erfindungsgemäßer Auslauf 23 für eine Sanitärarmatur gezeigt, der einen Auslaufteller 24 aufweist. Der Auslaufteller 24 ist zur besseren Darstellung entlang eines Durchmessers aufgeschnitten gezeigt und an der Schnittfläche schraffiert gezeichnet. Tatsächlich ist der Auslaufteller 24 jedoch rund. Der Auslaufteller 24 selbst besteht aus Glas und besitzt eine Mittelbohrung 26. In die Mittelbohrung 26 ist eine ringförmige Halterung 22' eingesetzt die eine Reihe von Leuchtdioden 22 aufnimmt. In der Mitte der Bohrung 26 ist eine Prallplatte 27 angeordnet. Durch den Zwischenraum 25 zwischen der Prallplatte 27 und der Halterung 22' kann bei angestellter Sanitärarmatur Wasser aus einer (hier nicht gezeigten) Wasserzuleitung strömen und den Auslaufteller 24 füllen. Der Auslaufteller 24 wird auf einem Armaturenkorpus in Schräglage zur Horizontalen montiert, so dass bei angestellter Sanitärarmatur ein Wasserstrom als Vorhang über die sich nach unten neigende Kante des Auslauftellers 24 rinnt. Auf der Prallplatte 27 kann auch das hier nicht gezeigte Bedienelement angeordnet werden.

Die in die Halterung 22' eingelassen Leuchtdioden 22 koppeln durch die Stirnseite entlang der Bohrung 26 Licht in den Auslaufteller 24 ein. Ein Teil des Lichts wird in dem gläsernen Auslaufteller 24 geführt und tritt an der nach außen gerichteten Stirnseite 24' aus. Ein anderer Teil des Lichts wird im Glas gestreut und tritt entlang des Lichtwegs durch die Oberfläche des Auslauftellers 24 aus, was diesem einen angenehmen Schimmer verleiht.

Wie im Ausführungsbeispiel zuvor werden die Leuchtdioden 22 von einer nicht gezeigten Steuerungseinrichtung angesteuert.

Indem der Auslaufteller 24 von innen mit Leuchtdioden 22 beleuchtet wird, dient dieser selbst als Anzeigeelement. In den Auslaufteller 24 können beispielsweise durch Einritzen des Materials mittels Laser Lichtaustrittsflächen eingebracht werden. Dabei sind eine Vielzahl von Figuren und Mustern wie z.B. konzentrische Ringe denkbar. Alternativ kann der Auslaufteller 24 auch mit speziellen lumineszierenden Polyester-Folien beschichtet werden, durch die stark leuchtende Objekte dargestellt werden können. Wegen der Transparenz des Auslauftellers und der Helligkeit der Objekte kann die Illusion frei im Raum schwebender Objekte erzeugen werden. So kann beispielsweise der Schriftzug des Herstellers oder der Name eines Hotels aufgebracht sein.

Wie im ersten Ausführungsbeispiel kann über die Steuerungseinrichtung die Farbe der Leuchtdioden 22 entsprechend der Mischwassertemperatur verändert werden.

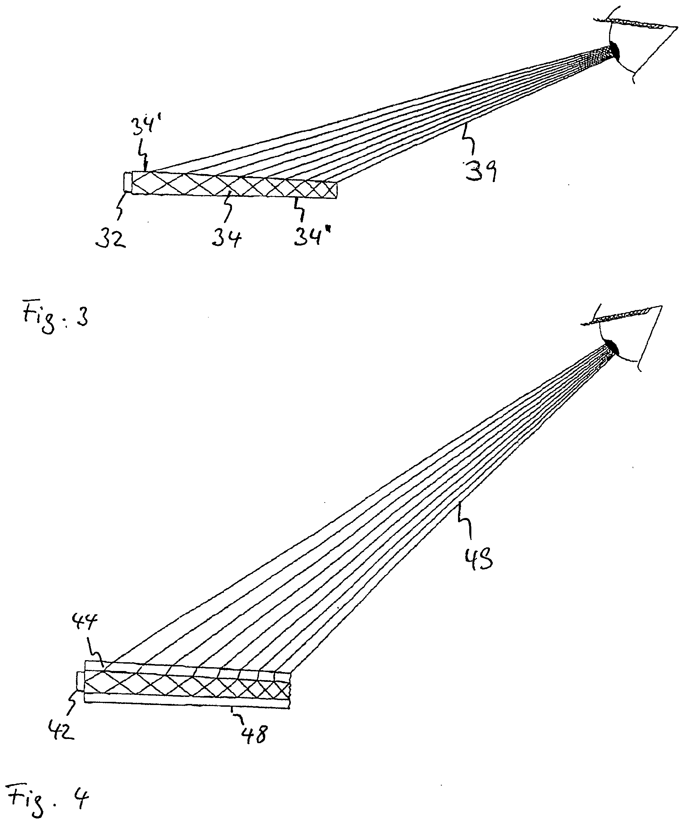

In Figur 3 ist ein keilförmiges transparentes Element 34 für einen Auslauf gezeigt, welches beispielsweise als transparente "Zunge" zur Auskleidung des Bodens eines wie in Figur 1a als Rinne ausgebildeten Auslaufs verwendet werden kann. An der linken Stirnfläche in Figur 3 ist eine Lichtquelle 32, beispielsweise eine Leuchtdiode, angebracht, die Licht in das transparente Element 34 einkoppelt.

Durch den keilförmigen Verlauf tritt zwischen den Oberflächen 34', 34" des transparenten Elements 34 Mehrfachreflexion auf. Bei jeder Reflexion tritt ein Teil des Lichts 39 durch die Oberfläche 34' aus, während der übrige Anteil in das Element zurückreflektiert wird. Dies verstärkt den Effekt des durch die Oberfläche 34' austretenden Lichtanteils 39, der bei planparallelen Flächen im Wesentlichen durch Streuung herrührt. Wird die Oberfläche 34' von Wasser überströmt, so zeigen sich interessante Lichteffekte und es wird beim Betrachter der Eindruck eines sich "flink bewegenden" Wasserflusses hervorgerufen.

Dieser Effekt lässt sich noch verstärken, indem die Oberfläche 34' teilverspiegelt wird. Bei einem Glaskörper ist es wiederum ausreichend, die Oberfläche 34' auf Hochglanz zu polieren, da an der polierten Trennfläche zwischen Glas und Luft bzw. Wasser bereits genügend Reflexionen auftreten.

Eine weitere Verbesserung lässt sich erzielen, indem auf der Unterseite 34" eine Verspiegelung angebracht wird, so dass kein Licht an der Unterseite 34" austreten kann, sondern das Licht vollständig in das Element 34 zurückreflektiert wird.

Bei einer Abwandlung ist ein Spiegel 48 in einem definierten Abstand von einem transparenten Element 44 angeordnet, wobei der Abstand sich entlang der Längsrichtung des Elements 44 verringern kann. Das transparente Element 44 ist hier eine einfache Glasplatte. Die Unterseite des transparenten Elements ist hochglanzpoliert. Eine Lichtquelle 42 emittiert Licht in den Hohlraum zwischen transparentem Element 44 und Spiegel 48, sodass Mehrfachreflexion zwischen dem transparenten Element 44 und dem Spiegel 48 eintritt. Ein Teil 49 des Lichts tritt bei jeder Reflexion durch das transparente Element 44 und wird vom Betrachter wahrgenommen.

Wenn das von unten über den Spiegel durchleuchtete transparente Element 44 von Wasser um- oder überströmt wird, so tritt eine zusätzliche Lichtbrechung durch das sich bewegende Wasser ein. Die zuvor stabilen Abbildungen der Lichtquelle erhalten dadurch eine Bewegung, die den Eindruck von fließendem Wasser beim Betrachter verstärkt.

In der in Figur 4 gezeigten nicht erfindungsgemäßen Anordnung muss der Abstand zwischen Spiegel 48 und transparentem Element 44 sich nicht notwendig verringern. Beide können auch parallel angeordnet sein oder ihr Abstand kann sich entlang der Längsrichtung sogar leicht vergrößern, da auch dann noch entsprechende Mehrfachreflexionen auftreten können.

## Patentansprüche

1. Sanitärarmatur mit einem Wasserzulauf, mindestens einem Bedienelement, einem eine wasserüberströmte Oberfläche aufweisenden, zumindest teilweise aus transparentem Material gefertigten Auslauf (13) und einer lichtaussendenden Beleuchtungseinrichtung (12; 32; 42)
wobei die Beleuchtungseinrichtung (12; 32; 42) eine oder mehrere Leuchtdioden umfasst und Licht in eine Stirnseite des transparenten Materials (14; 34; 44) des Auslaufs (13) derart einbringt, dass ein Teil des Lichts am Ende des Auslaufs (13) mit dem Wasserstrahl (15) und ein anderer Teil des Lichts entlang des Lichtweges durch die Oberfläche des transparenten Materials (14; 34; 44) des Auslaufs (13) austritt;
**dadurch gekennzeichnet, dass**
a) der Auslauf (13)
als eine nach oben offene Rinne ausgebildet ist, deren Boden aus dem transparenten Material (14; 34), besteht;
wobei
b) das transparente Material (14; 34) sich derart in einer Längsrichtung keilförmig verjüngt, dass entlang des Lichtweges zwischen den Oberflächen (34', 34 ") des transparenten Materials Mehrfachreflexionen auftreten, wodurch sich der Anteil des entlang des Lichtweges durch die Oberfläche austretenden Lichts erhöht.

2. Sanitärarmatur nach Anspruch 1, **dadurch gekennzeichnet, dass** eine Steuerungseinrichtung vorgesehen ist, die eine Eigenschaft der Beleuchtungseinrichtung (12; 32; 42) in Abhängigkeit vom Bedienzustand des Bedienelements steuert.

3. Sanitärarmatur nach Anspruch 2, **dadurch gekennzeichnet, dass** die Steuerungseinrichtung die Beleuchtungseinrichtung (12; 32; 42) anschaltet, wenn über das Bedienelement ein Wasserfluss ausgelöst wurde.

4. Sanitärarmatur nach Anspruch 2 oder 3, **dadurch gekennzeichnet, dass** die Steuerungseinrichtung die Farbe des eingekoppelten Lichts in Abhängigkeit von der über das Bedienelement eingestellten Wassertemperatur steuert.

5. Sanitärarmatur nach einem der vorhergehenden Ansprüche, **dadurch gekennzeichnet, dass** die Oberfläche des transparenten Materials (14; 34; 44) Lichtaustrittsflächen aufweist.

6. Sanitärarmatur nach einem der vorhergehenden Ansprüche, **dadurch gekennzeichnet, dass** auf die Oberfläche des transparenten Materials (14; 34; 44) eine oder mehrere lumineszierende Folien aufgebracht sind.

7. Sanitärarmatur nach einem der vorhergehenden Ansprüche, **dadurch gekennzeichnet, dass** das transparente Material (14; 34; 44) eine teilverspiegelte Oberfläche (34')aufweist.

8. Sanitärarmatur nach einem der vorhergehenden Ansprüche, **dadurch gekennzeichnet, dass** das transparente Material (14; 34) eine verspiegelte Unterseite (34") aufweist.

## Claims

1. Sanitary fitting having a water inlet, at least one operating element, an outlet (13) having a surface overflown with water and being at least partially manufactured of a transparent material, and a light-emitting illuminating device (12; 32; 42)
wherein the illuminating device (12; 32; 42) comprises one or multiple light-emitting diodes and incorporates light into an end face of the transparent material (14; 34; 44) of the outlet (13) such that a part of the light exits at the end of the outlet (13) with the water jet (15) and another part of the light exits along the light path through the surface of the transparent material (14; 34; 44) of the outlet (13);
**characterised in that**
a) outlet (13)
is constructed as a channel that is open at the top, in which the base of the outlet (13) is made of the transparent material (14; 34);
wherein
b) transparent material (14; 34) tapers wedge-shaped in a lengthwise direction such that multiple reflections along the light path between the surfaces (34'; 34") of the transparent material occur, whereby the amount of light exiting the surface along the light path is increased.

2. Sanitary fitting according to claim 1, **characterised in that** a control device is provided which controls a property of the illuminating device (12; 32; 42) as a function of the operating state of the operating element.

3. Sanitary fitting according to claim 2, **characterised in that** the control device switches the illuminating device (12; 32; 42) on if a flow of water has been triggered via the operating element.

4. Sanitary fitting according to claim 2 or 3, **characterised in that** the control device controls the colour of incorporated light as a function of the water temperature set to via the operating element.

5. Sanitary fitting according to any one of the preceding claims, **characterised in that** the surface of the transparent material (14; 34; 44) comprises light exit surfaces.

6. Sanitary fitting according to any one of the preceding claims, **characterised in that** one or multiple luminescent foils are applied to the surface of the transparent material (14; 34; 44).

7. Sanitary fitting according to any one of the preceding claims, **characterised in that** the transparent material (14; 34; 44) comprises a partially mirrored surface (34').

8. Sanitary fitting according to any one of the preceding claims, **characterised in that** the transparent material (14; 34) comprises a mirrored underside (34").

## Revendications

1. Robinetterie sanitaire comprenant une arrivée d'eau, au moins un élément de manoeuvre, un bec de décharge (13) muni d'une surface submergée par de l'eau, fabriqué au moins partiellement en un matériau transparent, et un dispositif d'éclairage (12 ; 32 ; 42) émettant de la lumière,
ledit dispositif d'éclairage (12 ; 32 ; 42) incluant une ou plusieurs diode(s) électroluminescente(s), et injectant de la lumière dans une face frontale du matériau transparent (14 ; 34 ; 44) du bec de décharge (13) de façon telle qu'une partie de la lumière sorte avec le jet d'eau (15), à l'extrémité dudit bec de décharge (13), et qu'une autre partie de la lumière sorte à travers la surface dudit matériau transparent (14 ; 34 ; 44) dudit bec de décharge (13), le long du trajet lumineux,
**caractérisée par le fait que**
a) le bec de décharge (13)
est réalisé sous la forme d'une rigole ouverte vers le haut, dont le fond est constitué du matériau transparent (14 ; 34),
sachant que
b) ledit matériau transparent (14 ; 34) présente un amenuisement cunéiforme dans une direction longitudinale, de manière à provoquer des réflexions multiples le long du trajet lumineux, entre les surfaces (34', 34") dudit matériau transparent, accroissant ainsi la part de la lumière sortant à travers la surface le long dudit trajet lumineux.

2. Robinetterie sanitaire selon la revendication 1, **caractérisée par** la présence d'un dispositif de commande pilotant une propriété du dispositif d'éclairage (12 ; 32 ; 42) en fonction de l'état d'actionnement de l'élément de manoeuvre.

3. Robinetterie sanitaire selon la revendication 2, **caractérisée par le fait que** le dispositif de commande met le dispositif d'éclairage (12 ; 32 ; 42) en fonction lorsqu'un flux d'eau est déclenché par l'intermédiaire de l'élément de manoeuvre.

4. Robinetterie sanitaire selon la revendication 2 ou 3, **caractérisée par le fait que** le dispositif de commande pilote la couleur de la lumière injectée en fonction de la température de l'eau réglée par l'intermédiaire de l'élément de manoeuvre.

5. Robinetterie sanitaire selon l'une des revendications précédentes, **caractérisée par le fait que** la surface du matériau transparent (14 ; 34 ; 44) comporte des surfaces de sortie de lumière.

6. Robinetterie sanitaire selon l'une des revendications précédentes, **caractérisée par le fait qu'**un ou plusieurs films(s) luminescent(s) est (sont) déposé(s) sur la surface du matériau transparent (14 ; 34 ; 44).

7. Robinetterie sanitaire selon l'une des revendications précédentes, **caractérisée par le fait que** le matériau transparent (14 ; 34 ; 44) présente une surface (34') rendue partiellement réfléchissante.

8. Robinetterie sanitaire selon l'une des revendications précédentes, **caractérisée par le fait que** le matériau transparent (14 ; 34) présente une face inférieure (34") rendue réfléchissante.
